# EUROPÄISCHE PATENTSCHRIFT

(11) **EP 0 677 321 B1**
(45) Veröffentlichungstag und Bekanntmachung des Hinweises auf die Patenterteilung: **29.04.1998**
(21) Anmeldenummer: 95103690.4
(22) Anmeldetag: 14.03.1995
(51) Int. Cl.: B01D 69/08, B01D 71/36, C02F 3/20, B01F 3/04

(54) **Schlaucheinheit und Verfahren zur Herstellung derselben**
Hose assembly and method of making the same
Assemblage à tuyau et procédé de fabrication

(30) Priorität: 13.04.1994 DE 4412756
(43) Veröffentlichungstag der Anmeldung: 18.10.1995
(73) Patentinhaber: W.L. GORE & ASSOCIATES, 85640 Putzbrunn (DE)
(72) Erfinder: Witzko, Richard, D-85635 Höhenkirchen (DE)
(74) Vertreter: Klunker . Schmitt-Nilson . Hirsch

(56) Entgegenhaltungen:
- EP-A- 0 226 373
- EP-A- 0 526 823
- GB-A- 1 538 421
- GB-A- 2 267 655

## Beschreibung

Die Erfindung betrifft eine Membranschlaucheinheit sowie ein Verfahren zur Herstellung derselben.

Es ist bekannt für Stoffaustauschsysteme flüssig/flüssig oder flüssig/gasförmig Membranmodule einzusetzen, wobei sich insbesondere solche Module bewährt haben, die mit Hohlfasern, bzw. Kapillarschläuchen arbeiten. Die Schläuche werden dabei in zwei Stirnplatten eines Gehäuses flüssigkeits- und gasdicht befestigt, vorzugsweise eingegossen. Eines der am Stoffaustausch beteiligten Fluide, beispielsweise ein Gas durchströmt die Schläuche. Das Faserbündel ist in einem Gehäuse angeordnet, das vom anderen Fuid, beispielsweise einer Flüssigkeit, durchströmt wird. Der Wirkungsgrad des Stoffaustauschs wird unter anderem von den Strömungsverhältnissen beeinflußt. Die Schläuche können axial oder radial angeströmt werden.

Derartige Module werden beispielsweise zur Ultrafiltration und Mikrofiltration als auch zur Entgasung von z. B. organischen Flüssigkeiten und neuerdings zur Abgasreinigung eingesetzt, wobei zum Beispiel die Schlauchmembranen von dem zu reinigenden Gas durchströmt und die Außenseite der Schläuche von einer Flüssigkeit umströmt werden, die beispielsweise absorbtive Eigenschaften hat und Schadstoffe binden kann.

Zur Verbesserung des Wirkungsgrades des Stoffaustausches hat es sich als vorteilhaft erwiesen, Schlauchmembranen aus PTFE zu verwenden, da diese sowohl gute chemische als auch thermische Beständigkeit und insbesondere eine niedrige Oberflächenspannung und demgemäß sehr gute hydrophobe Eigenschaften aufweisen.

Bekannte PTFE-Schläuche werden durch Pastenextrusion hergestellt. Die erzielbaren Wandstärken sind durch dieses Verfahren limitiert. Ein Recken des Materials ist nur in Längsrichtung möglich. Darüberhinaus ist das Verfahren aufwendig und die Schläuche daher teuer.

Aus der US-A-4 791 966 ist ein Verfahren zum Herstellen von Schläuchen bekannt, wobei ein im Querschnitt in der Mitte verdicktes Flachband aus mikroporösem, gerecktem PTFE spiralförmig um einen Draht gewickelt, gesintert und dann vom Draht abgezogen wird. Dieses Verfahren hat gegenüber dem erstgenannten Verfahren eine Reihe von Vorteilen. Insbesondere läßt sich die Wandstärke der Schlauchmembranen in weiten Grenzen variieren. Auch kann von vornherein ein Material mit einer bestimmten Mikroporösität eingesetzt werden. Nachteilig ist insbesondere die umständliche Handhabung der Schläuche beim Zusammenbau der Module, sowie die immer noch recht aufwendige und teure Fertigung der Schläuche.

Ausgehend von diesem Stand der Technik liegt der Erfindung die Aufgabe zugrunde, eine neue kostengünstige Schlauchmembran sowie ein Verfahren zur Herstellung von Schlauchmembranen anzugeben, wobei insbesondere die Handhabbarkeit der Schläuche verbessert und ein Zusammenbau entsprechender Module erleichtert werden soll.

Erfindungsgemäß wird die Aufgabe durch die Merkmale des Anspruchs 1 gelöst. Wesentlich war die Erkenntnis, einzelne Schlauchmembranen zu einer Einheit zusammenzufassen, die etwa einem mehradrigen Flachbandkabel entspricht. Die die einzelnen Schläuche (Hohlfasern) verbindenden Stege können dabei vorzugsweise durchbrochen sein, so daß eine allseitige Umströmung der Schläuche in den Membranmodulen sichergestellt ist. Vorteilhafte Weiterbildungen der erfindungsgemäßen Schlaucheinheit sind Gegenstand der Unteransprüche 2 mit 9.

Das erfindungsgemäße Verfahren zur Herstellung der Schlaucheinheit ist Gegenstand von Anspruch 16 und 20. Vorteilhafte Weiterbildungen des Verfahrens sind in den Ansprüchen 17 bis 19 benannt.

Nachfolgend wird die Erfindung anhand der beigefügten Zeichnung näher erläutert. Darin zeigen:
- Figur 1: eine perspektivische Darstellung eines Stückes der Membranschlaucheinheit,
- Figur 2: eine schematische Darstellung einer Vorrichtung zur Durchführung des Herstellungsverfahrens und
- Figur 3: einen Querschnitt durch den Spalt zwischen den beiden Profilwalzen der Vorrichtung nach Figur 2.

Gemäß Figur 1 besteht die Membranschlaucheinheit 10 aus mehreren nebeneinander in einer Ebene angeordneten Schläuchen (Hohlfasern) 12, die durch Stege 14 miteinander verbunden sind. Die Stege können offene Durchbrechungen 16 aufweisen. Derartige Schlaucheinheiten sind wesentlich leichter zu handhaben als einzelne Schläuche, sie können leicht aufgewickelt oder gefaltet werden. Ihre Montage bei der Herstellung von Membranmodulen ist einfach, da immer mehrere Schläuche (Hohlfasern) gleichzeitig verlegt werden können. Die Stege 14 wirken darüberhinaus als Abstandshalter, so daß die Schläuche (Hohlfasern) beim Betrieb der Module nicht zusammengedrückt werden.

Die Schlauchmembranen bestehen aus 2 zusammenlaminierten Schichten einer mikroporösen, gereckten PTFE-Membran (Polytetrafluorethylen). Ein Verfahren zur Herstellung solcher Membranen ist in den US-Patentschriften 3 953 566 und 4 187 390 beschrieben. Durch den inerten Charakter des Materials und die hydrophobe Oberfläche eignet sich dieses Material hervorragend für eine Reihe von Stoffaustauschsystemen. Vorzugsweise wird das Material vor der Herstellung der Schläuche einachsig oder zweiachsig verstreckt, so daß es durch die dadurch erzielte Mikroporösität gasdurchlässig wird aber flüssigkeitsdicht bleibt. Um mögliche Fehlstellen der Membran abzudichten, können die Schläuche (Hohlfasern) auch aus mehreren übereinanderlaminierten Membranlagen bestehen. Eine oder mehrere der Membranlagen können entweder beispielsweise mit einer gas-selektiven Beschichtung beschichtet sein, oder aber durch eine oder mehrere Lagen eines anderen Materials, zum Beispiel einer Verstärkung in Form eines Glasfaser-Vlieses oder eines Gewebes, ersetzt werden, oder aber beispielsweise mit anorganischen oder organischen Stoffen wie Aktivkohle gefüllt sein. Eine gas-selektive Beschichtung kann z. B. aus massivem FEP (Fluorethylenpropylen), PFA oder Nafion (R) 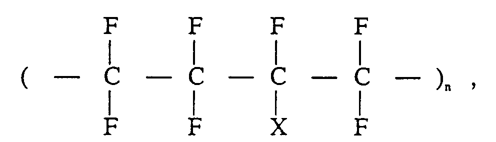 wobei x = SO₃H oder COOH, bestehen.

Die Membranlagen können auch unterschiedliche Porenstrukturen aufweisen, wie zum Beispiel eine grobporige Außenlage, mit vorzugsweise 0,1 - 10µ und eine feinporige Innenlage mit vorzugsweise 0,01 - 0,1µ Porendurchmesser. Der Innendurchmesser der Schläuche (Hohlfasern) beträgt 0,1 bis 2mm.

Die in Figur 1 gezeigte Schlaucheinheit kann in einer Vorrichtung hergestellt werden, wie sie schematisch in Figur 2 gezeigt ist. Zwei Flachbänder 18 aus einer mikroporösen, gereckten PTFE-Membran werden in den Spalt zwischen zwei Profilwalzen 20 eingeführt. In die Oberfläche der Profilwalzen 20 sind Rillen 22 (in Fig. 3 gezeigt) eingeschnitten, die einander jeweils gegenüberliegen, so daß im Querschnitt runde Hohlräume gebildet werden, in denen Drähte bzw. Dorne 24 stationär angeordnet sind. Die Drähte 24 haben einen Außendurchmesser, der geringfügig Kleiner ist als der Innendurchmesser des von den Rillen 22 gebildeten Hohlraums.

Die beiden Flachbänder 18 werden durch den Walzenspalt gezogen, wobei sie zusammenlaminiert werden und sich im Bereich der Rillen 22 um die dort angeordneten Drähte 24 legen, so daß die Schläuche (Hohlfasern) 12 gebildet werden. Die Verbindung der Bänder erfolgt über mittels der Profilwalzen 20 erzeugten Druck. Dabei werden die Walzen mit dem Druckmomentschlüssel derart angezogen, daß der zwischen den Walzen verbleibende Zwischenraum der Wandstärke der Schlauchmembrane entspricht. Zusätzlich kann eine oder mehrere bekannte Verbindungstechnologien, wie beispielsweise Kleben, Hitze oder Laserbestrahlung angewandt werden. So können den Profilwalzen 20 zum Beispiel Kleberauftragswalzen vorgeschaltet werden. Die Bänder 18 können entweder während ihrer Verweilzeit im Walzenspalt oder aber nach dem Verlassen dieses mit Hitze beaufschlagt werden. Dafür können entweder die Profilwalzen 20 und/oder die Drähte 24 beheizt sein oder die Bänder werden durch ein Sinterbad oder eine Heißlufteinheit 26 geführt. In dieser Einheit wird die Oberfläche der zusammenlaminierten Membranen angeschmolzen und dadurch verfestigt. Dabei wird eine Verweilzeit von 2-3 s bei einer Temperatur von 350 - 400°C im Sinterbad bevorzugt.

Das Abziehen der zusammenlaminierten Flachbänder von den Drähten 24 erfolgt entweder vor oder auch nach der Sinterstation 26. Letzteres hat den Vorteil, daß ein Kollabieren der Schläuche bei der Wärmebehandlung mit Sicherheit verhindert wird.

Die Membranschlaucheinheit in form eines endlosen Bandes kann dann spiralförmig aufgewickelt oder zusammengefaltet werden und steht für die Weiterverarbeitung bei der Herstellung entsprechender Membranmodule zur Verfügung. Das Band kann jedoch auch in Stücke geschnitten und die einzelnen Endabschnitte parallel zueinander und beabstandet voneinander in dem Modul angeordnet werden.

Während der Zusammenführung der zwei Flachbänder kann ein Fluid oder Feststoff zwischen die Bänder geführt werden. So kann auf einfache und kostengünstige Weise eine Schlaucheinheit erzeugt werden, bei der die Schläuche sofort gefüllt sind und nicht erst im Nachhinein gefüllt werden müssen.

Selbstverständlich ist die Erfindung nicht auf die hier als bevorzugt genannten PTFE-Membranen beschrähkt, auch andere mikroporöse polymere Materialien, z. B. Polyethylen, Polypropylen können Verwendung finden. Dabei müssen die polymeren Materialien nicht unbedingt porös sein. Z. B. gibt es Polycarbonat und Polyethylen sowohl in poröser als auch nicht poröser Form, wahrend FEP in der Regel nicht porös ist. All diese Materialien können jedoch in Zusammenhang mit der Erfindung verwendet werden.

Neben dem beschriebenen kontinuierlichen Verfahren kann die erfindungsgemäße Schlaucheinheit auch diskontinuierlich hergestellt werden, indem ein Flachband in ein im wesentlichen planes Werkzeug eingelegt wird, welches mit mehreren parallelen, voneinander beabstandeten halbrunden Ausnehmungen versehen ist, indem des weiteren Drähte in die dadurch auf dem Flachband entstandenen Kuhlen gelegt werden, und indem schließlich ein zweites Flachband und ein zweites entsprechend geformtes Werkzeugteil auf diese Anordnung gelegt werden. Durch Zugabe von Druck (5 - 500 N/cm², vorzugsweise 10 - 100 N/cm²) und Temperatur (300 - 400 °C) über einen Zeitraum von 2 - 100 s (je nach Material und Temperatur) werden die Bänder an Stegen, die zwischen den Ausnehmungen liegen verpresst und auf diese Weise zusammengefügt. Dann werden die Bänder abgeschnitten und die Drähte entnommen, sodaß eine Schlaucheinheit in Planform entsteht. Das Werkzeug würde dem in Fig. 3 dargestellten prinzipiell entsprechen.

Die erfindungsgemäße Membranschlaucheinheit kann vorteilhaft zur Begasung von z. B. Klärschlammbecken, Schwimmbädern oder Fermentoren in der Biochemie durch den Einsatz einer oder mehrerer derartiger Schlaucheinheiten verwendet werden.

Dabei werden die Schlaucheinheiten auf den Boden des Beckens gelegt. Gas (z. B. Luft, Sauerstoff oder Ozon) wird durch die Schläuche mit einem derartigen Druck geblasen, daß das Gas in den Klärschlamm in Form von extrem feinen Bläschen geblasen wird. Im Becken werden meist aerobe Mikroorganismen eingesetzt, die zum Leben entsprechend Sauerstoff benötigen. Je feiner daher z. B. die Luft verteilt ist, desto effektiver ist die Sauerstoffzufuhr. Zur Zeit werden noch Gummischläuche verwendet, deren erzeugte Luftblasen relativ groß sind. Zudem müssen die Schläuche wasserdicht sein, da sonst Rückschlagventile erforderlich wären. Denkbar wäre auch eine Ausführung der Schläuche in der Art, daß die untere Lage z. B. aus Gummi oder Thermoplasten (wie Polypropylen oder PVC) und nur die obere Lage aus mikroporösem oder anderem porigen Material besteht. Die beiden Lagen werden mit einem Kleber verbunden oder laufen über eine beheizte Walze, die die Oberfläche von dem Thermoplasten anschmilzt.

Alternativ dazu können Module mit einer hohen Schlaucheinheitpackungsdichte in einem Behälter, der mit Flüssigkeit gefüllt ist, installiert werden. Das Gas wird dann mit einem derartigen Druck durch die Schläuche geführt, daß das Gas diffusiv durch die Wandung der Schläuche dringt (d. h., es werden keine Bläschen gebildet). Dieser wird dann von der Flüssigkeit z. B. durch physikalische Absorption aufgenommen.

Eine weitere Verwendung der durch das Verfahren hergestellten Schlaucheinheit liegt auf dem Gebiet chemischer Reaktoren. So kann z. B. innerhalb der Schläuche eine Lösung geführt werden, die z. B. in einem ersten Modul eine Substanz in Gasform aufnimmt und in einem nachgeschalteten zweiten Modul z. B. ein gasförmiges Reaktionsprodukt an ein Fluid abgibt. In einem dritten nachgeschalteten Modul wird wiederum eine weitere Substanz aufgenommen etc. Da die Module hintereinander geschaltet sind, entsteht eine kontinuierliche Reaktion. Dabei ist jedes Modul getrennt steuerbar und wird somit nur im Bedarfsfall eingesetzt.

Es ist ebenfalls möglich, die Schlaucheinheit zur Konzentrierung von z. B. Spüllösungen aus einem galvanischen Prozess einzusetzen. Dabei wird die zu konzentrierende Lösung durch die Hohlfasern geleitet, während ein Gas an den Schlauchmembranen vorbei geführt wird. Das Lösungsmittel verdampft ganz oder teilweise und die in den Hohlfasern verbleibenden aufkonzentrierten Stoffe können dem Reaktionsprozess erneut zugeführt werden.

Schließlich kann die erfindungsgemäße Schlaucheinheit auch vorteilhaft in Kleidungsstücken entweder einzeln oder in Lagen verwendet werden. Sie würde als eine Art Abstandshalter dienen und die Wasserdampfdurchlässigkeit des Kleidungsstücks verbessern. Der Wasserdampf würde dabei von der Körperseite her durch die Wandung der Hohlfasern diffusiv in deren Innenraum eindringen (durch Konzentrations-, Druck- oder Temperaturunterschiede entstandenes Partialdruckgefälle). Von dort würde man den Wasserdampf konvektiv durch die Wandung der Schläuche an die Außenseite des Kleidungsstücks abziehen. Dies hätte den Vorteil, daß der Wasserdampf vom Körper wegtransportiert würde.

## Patentansprüche

1. Membranschlaucheinheit bestehend aus mehreren laminierten Lagen, die so zusammenlaminiert sind, daß zwischen den Lagen mehrere nebeneinander in einer Ebene angeordnete Hohlfasern mit einem Innendurchmesser von 0.1 bis 2 mm gebildet sind, wobei die Membranschlaucheinheit in den Bereichen zwischen den Hohlfasern in Form von die Hohlfasern verbindenden Stegen ausgebildet ist.

2. Membranschlaucheinheit nach Anspruch 1, **dadurch gekennzeichnet,** daß mindestens eine Lage aus einer gereckten, mikroporösen und gesinterten PTFE-Membran besteht.

3. Membranschlaucheinheit nach Anspruch 2, **dadurch gekennzeichnet,** daß die Hohlfasern (12) flüssigkeitsdicht und gasdurchlässig sind.

4. Membranschlaucheinheit nach einem der Ansprüche 1 bis 3, **dadurch gekennzeichnet,** daß die Stege (14) offene Durchbrechungen (16) aufweisen.

5. Membranschlaucheinheit nach einem der Ansprüche 1 bis 4, **dadurch gekennzeichnet,** daß eine oder mehrere der Lagen aus einem anderen als dem Membranmaterial bestehen, insbesondere aus Glasfaser-Vlies oder einem Gewebe.

6. Membranschlaucheinheit nach einem der Ansprüche 1 bis 5, **dadurch gekennzeichnet,** daß die Membranlagen eine unterschiedlichere Porösität aufweisen.

7. Membranschlaucheinheit nach Anspruch 6, **dadurch gekennzeichnet,** daß die außenliegende Membran grobporig ist mit einem Porendurchmesser von 0,1 - 10 µm und die innenliegende Membran feinporig ist mit einem Porendurchmesser von 0,01 bis 0,1 µm.

8. Membranschlaucheinheit nach einem der Ansprüche 1 bis 7, **dadurch gekennzeichnet,** daß die Hohlfasern mit einer gasselektiven Beschichtung versehen sind.

9. Membranschlaucheinheit nach einem der Ansprüche 1 bis 8, **dadurch gekennzeichnet,** daß das die Hohlfasern bildende Material mit anorganische und organische Stoffen, insbesondere Aktivkohle gefüllt sind.

10. Verwendung der Membranschlaucheinheit nach einem der Ansprüche 1 bis 9 in einem Membranmodul für den Stoffaustausch zwischen zwei Fluiden.

11. Verwendung der Membranschlaucheinheit nach einem der Ansprüche 1 bis 9 in einem Membranmodul, **dadurch gekennzeichnet,** daß die Membranschlaucheinheit entweder in Form eines endlosen Bandes spiralförmig aufgewickelt oder zusammengefaltet wird oder einzelne Bandabschnitte parallel zueinander und beabstandet voreinander angeordnet sind.

12. Verwendung der Membranschlaucheinheit nach einem der Ansprüche 1 bis 9, in Modulform zur Begasung von Klärschlammbecken, Schwimmbädern oder Fermentoren.

13. Verwendung der Membranschlaucheinheit nach einem der Ansprüche 1 bis 9 in Modulform als kontinuierlicher Reaktor.

14. Verwendung der Membranschlaucheinheit nach einem der Ansprüche 1 bis 9 in einem Kleidungsstück zur Verbesserung der Dampfdurchlässigkeit.

15. Verwendung der Membranschlaucheinheit nach einem der Ansprüche 1 bis 9 zur Aufkonzentrierung von Lösungen.

16. Kontinuierliches Verfahren zur Herstellung einer Membranschlaucheinheit gemäß Anspruch 1, **gekennzeichnet durch** folgende Schritte:
(a) Zusammenführen zweier Membranflachbänder (18) in einem Spalt zwischen zwei Profilwalzen (20);
(b) Zusammenpressen der Membranflachbänder (18) im Walzenspalt, gegebenenfalls unter Wärme- und/oder Klebstoffzufuhr, wobei
(c) im Walzenspalt parallel nebeneinander, beabstandete Drähte (24) stationär angeordnet sind, die in entsprechende, in die Walzenoberfläche eingeschnittene Rillen (22) eingreifen;
(d) Abziehen der zusammenlaminierten Membranflachbänder aus dem Walzenspalt und gegebenenfalls Durchlaufen eines Sinterbades oder einer Heißlufteinheit (26);
(e) Abziehen der zusammenlaminierten Membranflachbänder von den stationären Drähten (24);
(f) Aufwickeln oder Einfalten der endlosen Membranschlaucheinheit (10) aus zusammenlaminierten Membranflachbänder.

17. Verfahren nach Anspruch 16, **dadurch gekennzeichnet,** daß während der Zusammenführung der zwei Membranflachbänder ein Fluid oder Feststoff zwischen die Bänder geführt wird.

18. Verfahren nach Anspruch 16 oder 17, **dadurch gekennzeichnet,** daß die Membranflachbänder (18) aus einer gereckten, mikroporösen PTFE-Membran bestehen.

19. Verfahren nach einem der Ansprüche 16 bis 18, **dadurch gekennzeichnet,** daß nacheinander mehrere Lagen zusammenlaminiert werden.

20. Diskontinuierliches Verfahren zur Herstellung einer Membranschlaucheinheit nach Anspruch 1 **gekennzeichnet durch** folgende Schritte:
(a) Einlegen eines ersten Membranflachbandes in ein erstes, im wesentlichen planes Werkzeug mit einer oder mehreren beabstandeten halbrunden Ausnehmungen,
(b) Einlegen von Drähten auf die auf dem Membranflachband entstandenen Kuhlen,
(c) Auflegen eines zweiten Membranflachbandes und eines zweiten entsprechenden Werkzeugs,
(d) Zugabe von Druck und Temperatur über einen Zeitraum, der ausreicht, um die zwischen den Ausnehmungen liegenden Bereiche der Membranflachbänder miteinander zusammenzufügen.
(e) Entnehmen der Drähte aus dem Laminat.

## Claims

1. A membrane tube unit consisting of a plurality of layers laminated together so as to form between the layers a plurality of hollow fibers disposed side by side in a plane with an inside diameter of 0.1 to 2 mm, the membrane tube unit being designed in the areas between the hollow fibers in the form of webs connecting the hollow fibers.

2. The membrane tube unit of claim 1, characterized in that at least one layer consists of a stretched, microporous and sintered PTFE membrane.

3. The membrane tube unit of claim 2, characterized in that the hollow fibers (12) are liquid-tight and gas-permeable.

4. The membrane tube unit of any of claims 1 to 3, characterized in that the webs (14) have open perforations (16).

5. The membrane tube unit of any of claims 1 to 4, characterized in that one or more of the layers consist of a material than other the membrane material, in particular glass fiber mat or a fabric.

6. The membrane tube unit of any of claims 1 to 5, characterized in that the membrane layers have different porosity.

7. The membrane tube unit of claim 6, characterized in that the outside membrane is coarse-pored with a pore diameter of 0.1 to 10 microns and the inside membrane is fine-pored with a pore diameter of 0.01 to 0.1 microns.

8. The membrane tube unit of any of claims 1 to 7, characterized in that the hollow fibers are provided with a gas-selective coating.

9. The membrane tube unit of any of claims 1 to 8, characterized in that the material forming the hollow fibers is filled with inorganic and organic substances, in particular active carbon.

10. Use of the membrane tube unit of any of claims 1 to 9 in a membrane module for mass transfer between two fluids.

11. Use of the membrane tube unit of any of claims 1 to 9 in a membrane module, characterized in that the membrane tube unit is either wound or folded in a spiral shape in the form of an endless band, or individual band portions are disposed parallel to each other and spaced apart.

12. Use of the membrane tube unit of any of claims 1 to 9 in module form for gassing sewage sludge basins, swimming pools or fermentors.

13. Use of the membrane tube unit of any of claims 1 to 9 in module form as a continuous reactor.

14. Use of the membrane tube unit of any of claims 1 to 9 in a garment for improving the vapor permeability.

15. Use of the membrane tube unit of any of claims 1 to 9 for concentrating solutions.

16. A continuous method for producing the membrane tube unit of claim 1, characterized by the following steps:
(a) bringing together two membrane flat bands (18) in a slit between two shape rolls (20);
(b) compressing the membrane flat bands (18) in the roll slit, optionally supplying heat and/or adhesive, whereby
(c) wires (24) spaced parallel side by side are disposed in stationary fashion in the roll slit and engage corresponding grooves (22) cut into the roll surface;
(d) removing the laminated membrane flat bands from the roll slit and optionally running them through a sintering bath or hot air unit (26);
(e) removing the laminated membrane flat bands from the stationary wires (24);
(f) winding up or folding in the endless membrane tube unit (10) of laminated membrane flat bands.

17. The method of claim 16, characterized in that a fluid or solid is passed between the membrane flat bands while the two bands are being brought together.

18. The method of claim 16 or 17, characterized in that the membrane flat bands (18) consist of a stretched, microporous PTFE membrane.

19. The method of any of claims 16 to 18, characterized in that a plurality of layers are laminated together successively.

20. A discontinuous method for producing the membrane tube unit of claim 1, characterized by the following steps:
(a) inserting a first membrane flat band into a first, substantially plane tool with one or more spaced semicircular recesses,
(b) inserting wires on the pits resulting on the membrane flat band,
(c) laying on a second membrane flat band and second corresponding tool,
(d) adding pressure and temperature over a time period which suffices to join together the areas of the membrane flat bands located between the recesses,
(e) removing the wires from the laminate.

## Revendications

1. Unité formant tuyau à membrane, constituée par plusieurs couches superposées, qui sont réunies par stratification de telle sorte qu'entre les couches sont formées plusieurs fibres creuses, qui sont disposées côte-à-côte dans un plan et ont un diamètre intérieur de 0,1 à 2 mm, l'unité formant tuyau à membrane étant agencée, dans les zones situées entre les fibres creuses, sous la forme de barrettes reliant les fibres creuses.

2. Unité formant tuyau à membrane selon la revendication 1, caractérisée en ce qu'au moins une couche est constituée par une membrane de PTFE étirée, microporeuse et frittée.

3. Unité formant tuyau à membrane selon la revendication 2, caractérisée en ce que les fibres creuses (12) sont étanches aux liquides et aux gaz.

4. Unité formant tuyau à membrane selon les revendications 1 à 3, caractérisée en ce que les barrettes (14) possèdent des passages ouverts (16).

5. Unité formant tuyau à membrane selon l'une des revendications 1 à 4, caractérisée en ce qu'une ou plusieurs des couches sont constituées d'un matériau autre que le matériau en forme de membrane, et notamment sont constituées par une nappe de fibres de verre ou par un tissu.

6. Unité formant tuyau à membrane selon l'une des revendications 1 à 5, caractérisée en ce que les couches formées d'une membrane possèdent des porosités différentes.

7. Unité formant tuyau à membrane selon la revendication 6, caractérisée en ce que la membrane extérieure possède des pores grossiers ayant un diamètre de 0,1-10 µm et que la membrane intérieure est réalisée avec des pores fins ayant un diamètre de 0,01 à 0,1 µm.

8. Unité formant tuyau à membrane selon l'une des revendications 1 à 7, caractérisée en ce que les fibres creuses sont pourvues d'un revêtement sélectif pour le gaz.

9. Unité formant tuyau à membrane selon l'une des revendications 1 à 8, caractérisée en ce que le matériau constituant les fibres creuses est rempli par des substances minérales et organiques, notamment du charbon actif.

10. Utilisation de l'unité de tuyau à membrane selon l'une des revendications 1 à 9 dans un module de membrane pour l'échange de substances entre deux fluides.

11. Utilisation d'une unité de tuyau à membrane selon l'une des revendications 1 à 9 dans un module de membrane, caractérisée en ce que l'unité de tuyau à membrane est enroulée ou repliée selon une configuration hélicoïdale sous la forme d'une bande sans fin ou que des éléments individuels de bande sont disposés parallèlement entre eux et à distance les uns des autres.

12. Utilisation d'une unité de tuyau à membrane selon l'une des revendications 1 à 9 sous forme modulaire pour l'absorption de gaz de bassins pour boues de curage, de piscines ou de dispositifs de fermentation.

13. Utilisation d'une unité de tuyau à membrane selon l'une des revendications 1 à 9 sous forme modulaire à la manière d'un réacteur continu.

14. Utilisation d'une unité de tuyau à membrane selon l'une des revendications 1 à 9, dans un élément d'habillage pour améliorer la capacité de transmission de la vapeur.

15. Utilisation d'une unité de tuyau à membrane selon l'une des revendications 1 à 9, pour la concentration de solutions.

16. Procédé continu pour fabriquer une unité de tuyau à membrane selon la revendication 1, caractérisé par les étapes suivantes :
(a) réunion de deux bandes plates de membrane (18) dans une fente entre deux rouleaux profilés (20);
(b) compression conjointe des bandes plates de membrane (18) dans la fente entre les rouleaux, éventuellement moyennant l'apport d'une chaleur et/ou d'un adhésif,
(c) des fils distants (24), qui sont parallèles entre eux dans la fente entre les rouleaux et qui s'engagent dans des rainures correspondantes (22) découpées dans la partie supérieure des rouleaux, étant disposés de façon fixe;
(d) retrait des bandes plates de membrane réunies par stratification hors de la fente entre les rouleaux et éventuellement passage des bandes dans un bain de frittage ou dans une unité de projection d'air chaud (26);
(e) retrait des bandes plates à membrane réunies par stratification, à partir des fils fixes (24);
(f) enroulement ou pliage de l'unité de tuyau à membrane sans fin (10) à partir des bandes plates de membrane réunies par stratification.

17. Procédé selon la revendication 16, caractérisé en ce qu'un fluide ou une substance solide est guidé entre les bandes pendant la réunion des deux bandes plates de membrane.

18. Procédé selon la revendication 16 ou 17, caractérisé en ce que les bandes plates de membrane (18) sont constituées par une membrane de PTFE microporeuse étirée.

19. Procédé selon l'une des revendications 16 à 18, caractérisé en ce que plusieurs couches sont réunies successivement par stratification.

20. Procédé discontinu pour fabriquer une unité de tuyau à membrane selon la revendication 1, caractérisé par les étapes suivantes :
(a) insertion d'une première bande plate de membrane dans un premier outil essentiellement plat comportant un ou plusieurs évidements semi-circulaires distants,
(b) insertion de fils dans les cavités qui apparaissent dans la bande plate de membrane,
(c) application d'une seconde bande plate de membrane et d'un second outil correspondant,
(d) application d'une pression et d'une température pendant un intervalle de temps qui suffit pour réunir entre elles les deux parties, situées entre les évidements, des bandes plates de membrane,
(e) retrait des fils à partir du stratifié.
